Europäisches Patentamt

European Patent Office

Office européen des brevets

(19)

(11) Veröffentlichungsnummer: **0 145 793
B1**

(12)

# EUROPÄISCHE PATENTSCHRIFT

(45) Veröffentlichungstag der Patentschrift:
**03.08.88**

(51) Int. Cl.⁴: **G 02 B 6/24**

(21) Anmeldenummer: **83112055.5**

(22) Anmeldetag: **01.12.83**

(54) Interferometeranordnung mit Mach-Zehnder-Interferometer.

(43) Veröffentlichungstag der Anmeldung:
**26.06.85 Patentblatt 85/26**

(45) Bekanntmachung des Hinweises auf die Patenterteilung:
**03.08.88 Patentblatt 88/31**

(84) Benannte Vertragsstaaten:
**DE FR GB**

(56) Entgegenhaltungen:
**DE - A - 3 014 719
DE - B - 2 745 940
GB - A - 2 076 994**

**Patent Abstracts of Japan vol. 6, no. 217, 30. Oktober
1982**

(73) Patentinhaber: **IBM DEUTSCHLAND GMBH,
Pascalstrasse 100, D-7000 Stuttgart 80 (DE)**

(84) Benannte Vertragsstaaten: **DE**

(73) Patentinhaber: **International Business Machines
Corporation, Old Orchard Road, Armonk,
N.Y. 10504 (US)**

(84) Benannte Vertragsstaaten: **FR GB**

(72) Erfinder: **Korth, Hans-Erdmann, Dipl.-Phys., Sandberger
Strasse 34, D-7000 Stuttgart (DE)**

(74) Vertreter: **Teufel, Fritz, Dipl.-Phys. et al, IBM
Deutschland GmbH. Europäische Patentdienste
Postfach 265, D-8000 München 22 (DE)**

ACTORUM AG

**Beschreibung**

Derartige Interferometeranordnungen sind als Interferenzrefraktoren besonders geeignet für genaue Messungen von Brechzahländerungen, Spannungen in Gläsern, Messungen von flüssigen und gasförmigen Medien und dergleichen. Eine Anordnung dieser Art ist in der DE-PS 1 085 350 beschrieben, bei welcher ein einfallender Lichtstrahl an einem ersten planparallelen Strahlteiler in zwei Teilstrahlen zerlegt wird, die nach Reflexion an zwei spiegelnden Prismen an einem zweiten Strahlteiler wieder vereinigt werden. Das zu messende bzw. zu untersuchende Medium wird in den Strahlengang gebracht, um dann an den Lichtaustrittsstellen die sich ergebenden Gangunterschiede zu erfassen. Im nach Durchlaufen des zweiten Strahlteilers wiedervereinigten Lichtstrahl liegt ein Nicolsches Prisma mit Austrittsflächen für den ordentlichen und außerordentlichen Lichtstrahl. Hiedurch werden die beiden sich ergebenden, senkrecht zueinander polarisierten Interferenzerscheinungen räumlich getrennt, so daß in Abhängigkeit von einem in den Strahlengang eingebrachten Medium unterschiedliche Lichtausgänge von den Austrittsflächen zugeordneten Photozellen erfaßt werden können. Wegen der Vielzahl der Neigungsmöglichkeiten der Strahlteiler und der spiegelnden Prismen ist eine sehr genaue Justierung erforderlich, die aber durch schrittweises und systematisches Vorgehen mehr oder weniger mühsam durchzuführen ist.

Die vorliegende Erfindung stellt sich dabei die Aufgabe, eine Interferometeranordnung der eingangs genannten Art in Aufbau und Handhabung wesentlich zu vereinfachen und zur Lichtweg-Umschaltung in der Lichtleitertechnik für optische Nachrichtenzwecke geeignet zu machen.

Diese Aufgabe wird durch die in Anspruch 1 gekennzeichnete Erfindung gelöst; Ausgestaltungen der Erfindung sind in den abhängigen Ansprüchen gekennzeichnet.

Eine Anwendung der Interferometeranordnung auf Lichtweg-Umschaltung ist in Anspruch 2 gekennzeichnet.

Aus einer Veröffentlichung in «Applied Optics» vom 1. September 1980, Bd. 19, Heft 17, auf den Seiten 2921 bis 2925, von R.E. Wagner und J. Cheng, unter dem Titel «Electrically controlled optical switch for multimode fiber applications» ist bereits eine andersartige Anordnung zur Lichtweg-Umschaltung mit Hilfe einer über zwei Lichtwege in jeweils senkrechter Einfallsrichtung beaufschlagten Flüssigkristallzelle, allerdings unter Verwenden von Spiegelprismen, bekannt geworden. Diese Anordnung beruht aber nicht auf dem Interferometerprinzip. Außerdem ist ein derartiger Lichtweg-Umschalter zur Realisierung in Miniaturausführung aufgrund der Verwendung von Spiegelprismen nur begrenzt anwendbar.

Dies gilt ebenso für eine verbesserte Ausführung eines derartigen Lichtweg-Umschalters, wie er in der Veröffentlichung in «Optics Letters» Juni 1981, Bd. 6, Heft 6, auf den Seiten 275 und 276 von Richard A. Soref unter dem Titel «Low-cross-talk 2 x 2 optical switch» beschrieben ist.

Bei beiden obengenannten Veröffentlichungen beruht die Lichtweg-Umschaltung auf der Verwendung von Polarisationsstrahlteilern in Verbindung mit einer Flüssigkristallzelle. Wenn auch die erforderliche Prismenanordnung mit der dazwischenliegenden Flüssigkristallzelle keine so hohe Herstellungsgenauigkeit erfordert, wie es sonst bei den bekannten Interferometeranordnungen notwendig ist, so sind doch hohe Anforderungen an die Polarisationsstrahlteiler und deren Positionierung zu stellen, um möglichst geringe Durchlassverluste bzw. hohe Auslöschungsgrade bei nichtbeaufschlagten Lichtaustrittsstellen zu erzielen.

Während bei oben beschriebenem Lichtweg-Umschalter eine Anordnung nahegelegt wird, die sich einer Gradienten-Stablinse für Teilstrahlen führende Lichtwege bedient, ist in der Veröffentlichung von W.V. Smith unter dem Titel «Acoustically operated fiber optic switch» in «IBM Technical Disclosure Bulletin» Bd. 14, Heft 2, Juli 1971, auf der Seite 652 ein Lichtweg-Umschalter beschrieben, bei dem in Abhängigkeit vom Schaltzustand unterschiedliche Lichtwege in einer Gradienten-Stablinse bereitgestellt werden. Zwischen zwei Lichteintritts- und Lichtaustrittsstellen liegt eine Gradienten-Stablinse mit halber räumlicher Periodenlänge, die durch eine in ihre Mitte zur Einwirkung gebrachte Schallwelle den einen oder anderen Schaltzustand herbeizuführen vermag. Zum Auslösen der Umschaltung muß die zur Einwirkung gebrachte Schallwelle bestimmten Anforderungen genügen, um die Brillouin-Streubedingung zu erfüllen, was gewisse Anforderungen an die verwendeten Materialien, Herstellungsgenauigkeit und Frequenzeinhaltung der Schallwelle erfordert. Die Verwendung einer Interferometeranordnung wird hierbei aber nicht angesprochen oder auch nur nahegelegt.

Wie im Buch von Wolfgang Glaser mit dem Titel «Lichtleitertechnik», erschienen im VEB-Verlag Technik Berlin, auf Seite 90 ausgeführt, werden Gradienten-Stablinsen von halber räumlicher Periodenlänge mit einem Strahlteiler in ihrer Mitte dazu verwendet, die aus zwei Lichteintrittsstellen zugeführten Lichtstrahlen in einer Lichtaustrittsstelle zu vereinen oder einen aus einer Lichteintrittsstelle zugeführten Lichtstrahl auf zwei Lichtaustrittsstellen aufzuteilen. Auch hier wird nicht vom Interferometerprinzip Gebrauch gemacht, und der Strahlteiler liegt hierbei transversal zur Lichtausbreitungsrichtung in der hierin verwendeten Gradienten-Stablinse.

Ein bedeutsamer Vorteil der Erfindung liegt darin, daß die zum Umschalten der Flüssigkristallbereiche erforderliche Spannung aus photoelektrischer Energieumwandlung hergenommen werden kann, indem im einfachsten Falle eine Lichtfaser bis an die Schaltstelle, also an die Flüssigkristallzelle, herangeführt wird, um dort mit Hilfe einer Photodiode die erforderliche Schaltspannung zu erzeugen. Zweckmäßigerweise wird durch diese Spannung zunächst ein Oszillator angeregt, so daß in entsprechender Ausgestaltung der Erfindung die Flüssigkristallbereiche mit Wechselspannung betrieben werden.

Zur Zuleitung des für die Schaltspannung erforderlichen Lichtes kann anstelle eines besonderen Lichtleiters unter Verwenden einer vor die Interfero-

meter-Gradienten-Stablinse angesetzten Farb-strahlteiler-Gradienten-Stablinse das für die Umschaltspannung erforderliche Licht unmittelbar aus dem zu schaltenden Lichtstrahl gewonnen werden. Eine weitere Möglichkeit zur Lichtzuführung besteht darin, den für die Gewinnung der Umschaltspannung erforderlichen Lichtstrahl im Achsenbereich der Gradienten-Stablinse zu übertragen, was durch entsprechendes Anbringen der Lichteintrittsstellen für die Schaltlichtstrahlen ermöglicht wird.

Da die Interferometeranordnung gemäß der Erfindung mit einem Durchmesser der Gradienten-Stablinse von weniger als 1 mm äußerst klein gehalten werden kann, lassen sich ohne weiteres mehrere Schaltbauelemente auf einem gemeinsamen Substrat integrieren, um so eine Schaltzentrale zu realisieren.

Während bei herkömmlichen Interferometeranordnungen hohe Genauigkeitsanforderungen, verbunden mit entsprechendem Justieraufwand, zu stellen sind, ist die Herstellung von Interferometeranordnungen gemäß der Erfindung unter zwangsläufigem Einhalten eines hohen Genauigkeitsgrades denkbar einfach, da unter Verwenden handelsüblicher Gradienten-Stablinsen lediglich in an sich bekannter Weise einfach anzuwendende Schleifverfahrensgänge erforderlich sind. So kann z.B. eine größere Anzahl von Gradienten-Stablinsen auf eine ebene Werkstückhalterung in genau gleicher Höhe gekittet werden. Schleifen mit nachfolgendem Läppen läßt sich dann bis zum Erreichen der erwünschten Gradientenstabhälften unter Verwenden herkömmlicher Maßnahmen mit höchster Genauigkeit durchführen. Anschließend wird die Strahlteilerschicht aufgebracht, um dann die beiden Hälften der Gradienten-Stablinse miteinander zu verkitten.

Es gibt eine Vielzahl von Möglichkeiten, die Gradienten-Stablinsenteilhälften an ihren Halbquerschnittsflächen mit λ/4-Plättchen zur Erzeugung polarisationsabhängiger Phasenverschiebung zu versehen. So kann jeweils handelsübliche λ/4-Folie auf die Halbquerschnittsflächen aufgeklebt werden, die Halbquerschnittsflächen können anisotrop bedampft werden, und die Gradienten-Stablinsenteilhälften können durch entsprechendes Erwärmen mit anschließendem Abschrecken in den betreffenden Endbereichen eine definierte Spannungsdoppelbrechung erhalten.

Ohne Flüssigkristallzelle und ohne λ/4-Plättchen in der Mittelnut, also bei freiem Zwischenraum, läßt sich die Interferometeranordnung gemäß der Erfindung auch als Interferenzrefraktor einsetzen, so daß dank der Erfindung eine universell verwendbare Anordnung vorliegt.

Mit der Erfindung wird also eine Interferometeranordnung geschaffen, die auch in Miniaturausführung leicht herzustellen und außerdem weitgehend störunanfällig auszubilden ist. Bei dieser Interferometeranordnung ergibt sich dann noch der Vorteil, daß nachträgliches Justieren nach Zusammenbau nicht mehr erforderlich ist und daß dank der Erfindung eine Anordnung zur Verfügung steht, die infolge ihrer geringen Abmessungen sich zudem auch an bisher unzugänglichen Stellen einsetzen läßt.

Die Erfindung wird nachstehend in einer Ausführungsbeispielsbeschreibung anhand unten aufgeführter Zeichnungen näher erläutert.

Es zeigen:

Fig. 1 eine Prinzipdarstellung der Interferometeranordnung gemäß der Erfindung,

Fig. 2 Vektordiagamme, die anhand von Interferometeranordnungsschemen zur Erläuterung der Wirkungs- und Betriebsweise dienen,

Fig. 3 die Prinzipdarstellung eines Mehrfach-Lichtweg-Umschalters,

Fig. 4 ein Schema einer z.B. in der Anordnung nach Fig. 3 verwendeten Flüssigkristallzelle,

Fig. 5 einen Mehrfach-Stufenspiegel in Form eines Echelettegitters mit Andeutung der Strahlwege,

Fig. 6 eine Anordnung zu photoelektrischer Energieumwandlung zwecks Bereitstellens der Umschaltspannung,

Fig. 7 eine Gradienten-Stablinsen-Interferometeranordnung, bei der das zur photoelektrischen Energieumwandlung erforderliche Licht zusammen mit dem Signallicht über eine vorgesetzte Farbstrahlteiler-Gradienten-Stablinse zugeführt wird, sowie Querschnittsdarstellungen zur Erläuterung der Betriebsweise,

Fig. 8 ein Ausführungsbeispiel für eine Interferometeranordnung in schematischer Ansicht,

Fig. 9 ein Ausführungsbeispiel für eine Lichtweg-Umschaltanordnung mit mehreren Interferometeranordnungen gemäß der Erfindung,

Fig. 10 eine Schnittansicht der Anordnung nach Fig. 9.

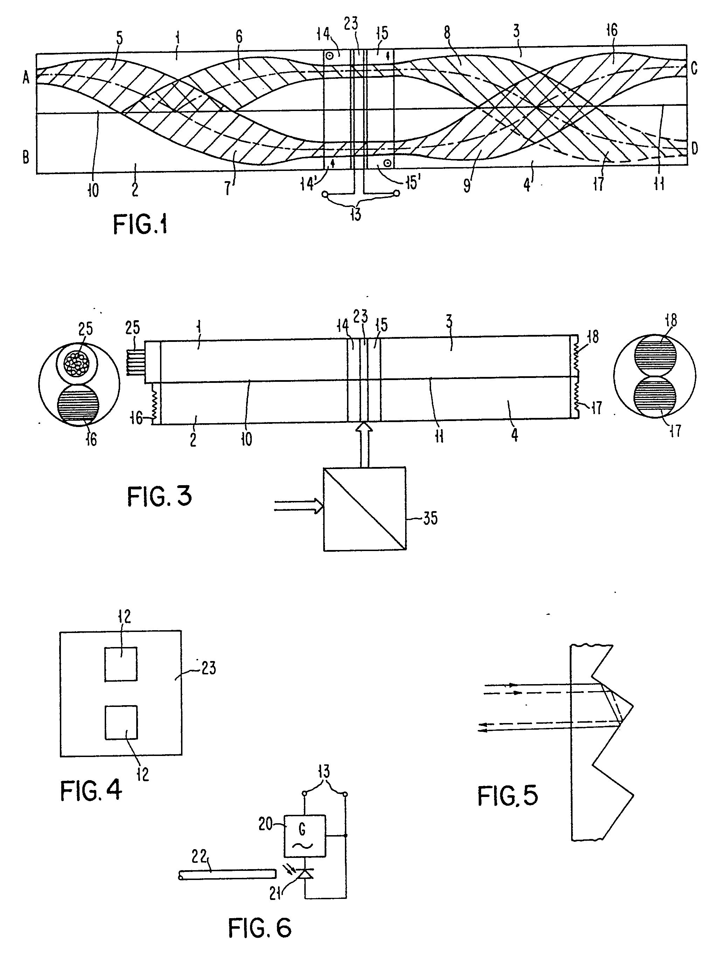

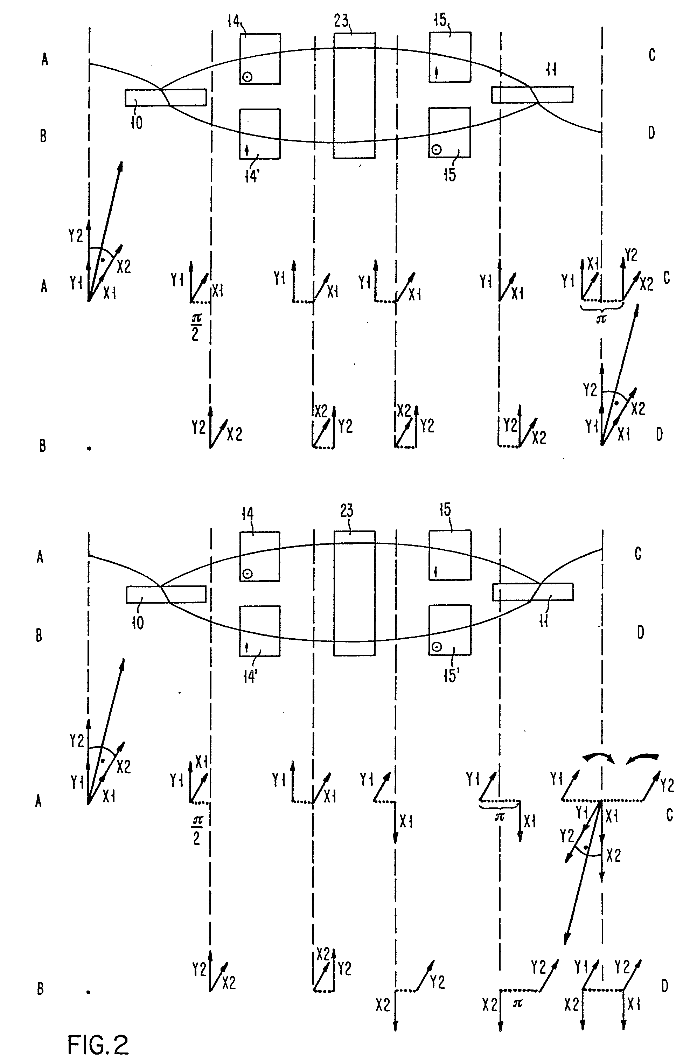

Die schematische Darstellung der erfindungsgemäßen Interferometeranordnung nach Fig. 1 zeigt die Gradienten-Stablinsenteile 1, 2 und 3, 4, die rechts und links von einem Zwischenraum liegen, der die λ/4-Plättchen 14, 14' und 15, 15' mit dazwischenliegender Flüssigkristallzelle 23 enthält. Die Flüssigkristallzelle 23 ist mit Anschlüssen 13 versehen, die zum Anlegen der Spannung des zur Umschaltung erforderlichen elektrischen Feldes mit Hilfe durchsichtiger Elektroden dienen. Die Gradienten-Stablinsenteile 1, 2 und 3, 4 haben je eine halbe räumliche Periodenlänge, wie es sich aus den angedeuteten sinusförmigen Lichtwegen 5 bis 9, 16 und 17 ergibt. Diese Lichtwege breiten sich zwischen einer Lichteintrittsstelle A und den Lichtaustrittsstellen C und D aus, wobei grundsätzlich auch ein hier nicht angedeuteter Lichtstrahlweg von einer weiteren, nicht gezeigten Lichteintrittsstelle B ausgehen könnte. Die Lichtstrahlwege sind hier zur Verdeutlichung stark ausgeweitet angedeutet. Jedoch hängt diese Ausweitung in Wirklichkeit stark von der numerischen Apertur des an die Interferometeranordnung angesetzten Lichtleiters zur Zuführung des Eingangslichtstrahls ab, so daß sich bei Verwenden von Lichtfasern hierzu nur äußerst geringe Ausweitungen der Lichtstrahlwege ergeben.

Die Gradienten-Stablinsenteile 1, 2 und 3, 4 sind symmetrisch längs ihrer Achse geteilt, wobei die so gebildeten Schnittflächen unmittelbar hieran anliegend je eine Strahlteilerschicht 10 und 11 einschließen. Gradienten-Stablinsenteile 1, 2 und 3, 4, die jeweils zwischen ihren Längsschnittflächen eine Strahlteilerschicht 10, 11 aufweisen, lassen sich verhältnismäßig einfach herstellen, indem handelsübliche Gradienten-Stablinsen von halber räumlicher Periodenlänge auf eine ebene Werkstückunterlage derart geklebt werden, daß ihre extremen freien Mantellinien ebenfalls in einer Ebene zu liegen kommen. Durch Schleifen mit nachfolgendem Läppen lassen sich hieraus halbzylindrige Gradienten-Stablinsenteilhälften mit genau in der Achse liegenden Längsschnittflächen herstellen. Nach an sich bekanntem Beschichten mit Strahlteilerschichten werden die halbzylindrigen Gradienten-Stablinsenteilhälften von der Unterlage gelöst und unter Selbstjustage miteinander verkittet. Diese Selbstjustage kann durch Einführen der halbzylindrigen Gradienten-Stablinsenteilhälften in eine Bohrung mit Gradienten-Stablinsendurchmesser in einem hierzu vorgesehenen Werkzeug oder einem Bauelement der Interferometeranordnung durchgeführt werden, indem diese Teilhälften hierin mit ihren Längsschnittflächen präzise aufeinandergeschoben werden.

Eine andere Möglichkeit besteht darin, ein Substrat mit Gradientenindexfasern in der oben angegebenen Weise zu bekleben oder diese in vorgeprägte Kerben des Substrats einzulegen, um dann wie zuvor durch Abschleifen und Polieren die halbzylindrigen Teilhälften zu erhalten. Anschließend werden die erhaltenen Längsschnittflächen jeweils mit der Strahlteilerschicht bedampft. Derart behandelte Substrate werden äußerst genau miteinander verkittet, wobei sichergestellt ist, daß die hierauf angebrachten halbzylindrigen Teilhälften mit ihren Längsschnittflächen exakt übereinander zu liegen kommen. Aus dem Substrat werden dann Streifen gesägt, deren Breite der Bildweite der Faserlinsen oder einem Vielfachen davon entspricht. Die Sägeflächen werden poliert, wobei dann die Vereinzelung erst nach Fertigstellen der Lichtweg-Umschalter vorgenommen wird.

Die λ/4-Plättchen 14, 14', 15, 15' lassen sich an den vorgesehenen Stellen ebenfalls in einfacher Weise ausbilden, solange noch die halbzylindrigen Gradienten-Stablinsenteilhälften auf dem Substrat kleben, das, wie oben erwähnt, in Streifen zerschnitten ist. Die freiliegenden Endbereiche der Teilhälften werden dann, wie oben bereits ausgeführt, behandelt.

In allen diesen aufgeführten Fällen läßt sich polarisationsabhängige Phasenverschiebung bei so behandelten Gradienten-Stablinsenteilhälften herbeiführen. Wohlgemerkt, jeweils nur eine Halbzylinder-Endfläche der auf dem Substrat geklebten Gradienten-Stablinsenteilhälften wird zur Erzeugung polarisationsabhängiger Phasenverschiebung hergerichtet.

Die nach Zusammenfügen zur Gradienten-Stablinse sich ergebenden Halbzylinder-Stirnflächen sind zum Ansetzen von Lichtleitern an den geplanten Lichteintritts- A, B und Lichtaustrittsstellen C, D vorgesehen.

Es versteht sich, daß zur Verwendung des erfindungsgemäßen Interferometers als Interferenzrefraktor der Verfahrensgang zum Aufbringen der λ/4-Plättchen auf die betreffenden Halbzylinder-Endflächen entfallen kann. In diesem Falle wird das Interferometer unter Beibehalten eines zwischen einander gegenüberliegenden halbzylindrigen Gradienten-Stablinsenteilhälften liegenden Zwischenraums zusammengebaut, der dann zum Einbringen des jeweils zu untersuchenden Objektes oder Mediums dient.

Wird hingegen das erfindungsgemäße Gradienten-Stablinsen-Interferometer für Lichtweg-Umschaltzwecke verwendet, dann müssen die halbzylindrigen Gradienten-Stablinsenteilhälften mit ihren wie oben behandelten Halbzylinder-Endflächen derart zusammengesetzt werden, daß sowohl bei frontal gegenüberliegenden, als auch bei nebeneinanderliegenden, mit den λ/4-Plättchen versehenen Halbzylinder-Endflächen jeweils unterschiedlich linear polarisierte Wellenkomponenten verzögert werden. Der der Lichteintrittsstelle zugeführte Lichtstrahl ist nicht-polarisiert, d.h. die in der Regel verwendeten Lichtquellen sind – wie unmittelbar einwirkendes Sonnenlicht – nahezu oder praktisch unpolairisert, so daß hierin zwei zueinander senkrecht linear polarisierte Wellenkomponenten enthalten sind. An dieser Stelle sei noch vermerkt, daß das der Lichteintrittsstelle zugeführte Licht ein breitbandiges Frequenzspektrum enthalten kann, aber keinesfalls nur monochromatisch zu sein braucht.

In der zusammengebauten Interferometeranordnung verzögert demnach, wie in Fig. 2 angedeutet, das λ/4-Plättchen 14 die waagerecht-linear-polarisierte Wellenkomponente, wohingegen das gegenüberliegende λ/4-Plättchen 15 die senkrecht-linear-polarisierte Wellenkomponente verzögert. Das λ/4-Plättchen 14' verzögert demgemäß die senkrecht-linear-polarisierte Wellenkomponente, wohingegen das gegenüberliegende λ/4-Plättchen 15' die waagerecht-linear-polarisierte Wellenkomponente verzögert.

Die Flüssigkristallzelle 23 kann insgesamt mit einer für alle Lichtstrahlwege gemeinsamen Flüssigkristallsubstanz gefüllt sein, jedoch andererseits auch, wie in Fig. 4 gezeigt, mehrere Flüssigkristallbereiche 12 enthalten, die einzelnen Lichtstrahlwegen der Interferometeranordnung zugeordnet sind. Im letzteren Falle muß dabei beachtet werden, daß die jeweilige Kantenlänge der Flüssigkristallbereiche 12 etwa doppelt so groß ist wie die Abbildung der jeweiligen Lichteintrittsstelle A oder B. Die Flüssigkristallzelle 23 muß mit einer Flüssigkristallsubstanz gefüllt sein, die unter der Wirkung eines angelegten elektrischen Feldes zu einer Polarisationsdrehung von 90° führt. Hierzu eignet sich beispielsweise eine homogen orientierte, verdrillt nematische Schicht. Im einfachsten Falle wird je nach verlangtem Schaltzustand der Lichtweg-Umschaltanordnung das elektrische Feld durch Anlegen entsprechender Spannung unmittelbar von einer Schaltstelle an die mit den durchsichtigen Elektroden der Flüssigkristallzelle verbundenen Anschlüsse 13 bereitgestellt oder nicht.

Die Lichtstrahlausbreitung hängt neben der numerischen Apertur auch von den vorliegenden Brechwertbereichen innerhalb der Gradienten-Stablinse ab. Bekanntlich muß ja die Brechwertverteilung vom Außenrand einer Gradienten-Stablinse zu ihrer Achse hin quadratisch abnehmen, wenn ein sinusförmiger Lichtstrahlweg innerhalb der Gradienten-Stablinse erzielt werden soll. Durch die Wahl des jeweiligen Verhältnisses von Länge zu Durchmesser der zu verwendenden Gradienten-Stablinse 1–4 kann daher auch der Lichteinfallswinkel zur Strahlteilerfläche optimal eingestellt werden. Hinzu kommt, daß bei äußerst geringer numerischer Apertur einer an eine Lichteintrittsstelle angesetzten Lichtfaser sich nicht nur eine, sondern auch mehrere Lichtfasern an eine entsprechende Anzahl von Lichteintrittsstellen auf eine Stirnfläche einer halbzylindrigen Gradienten-Stablinsenteilhälfte ansetzen lassen können.

Soll die erfindungsgemäße Interferometeranordnung als Lichtweg-Umschalter eingesetzt werden, dann läßt sich die Wirkungs- und Betriebsweise am besten anhand der Darstellung in Fig. 2 erläutern. Während der obere Teil der Darstellung sowohl schematisch die Interferometeranordnung als auch die Lichtstrahlwege und die Vektordiagramme ohne Einfluß der Flüssigkristallzelle 23 auf die Teilstrahlen andeutet, gilt der untere Teil der Darstellung sowohl mit schematischer Andeutung der Interferometeranordnung einschließlich der Lichtstrahlwege als auch mit den dazugehörigen Vektordiagrammen für den Fall, daß die Flüssigkristallzelle 23 unter Feldeinwirkung die Teilstrahlen hinsichtlich ihrer Polarisation beeinflußt. Die genannten Vektordiagramme sind jeweils gesondert für die Teilstrahlen in den obern Gradienten-Stablinsenteilhälften 1, 3 und in den unteren Gradienten-Stablinsenteilhälften 2, 4 gezeigt.

Der nicht-polarisierte Lichtstrahl an der Lichteintrittsstelle A besteht aus einer senkrecht polarisierten Wellenkomponente (mit Teilkomponenten $y_1$ und $y_2$) und aus einer waagrecht polarisierten Wellenkomponente (mit Teilkomponenten $x_1$ und $x_2$); diese Komponenten schwingen in einer Ebene senkrecht zur Zeichenebene von Fig. 2. Nach Durchgang durch den Strahlteiler 10 erleiden beide reflektierten Teilwellenkomponenten $y_1$ und $x_1$ einen voreilenden Phasensprung um $\pi/2$, wohingegen die den Strahlteiler 10 durchlaufenden Teilwellenkomponenten $y_2$ und $x_2$ sich ohne Phasensprung ausbreiten. Der obere Teilstrahl gelangt weiterhin über das obere $\lambda/4$-Plättchen 14, wobei die horizontal polarisierte Teilwellenkomponente $x_1$ verzögert wird. Der untere Teilstrahl gelangt über das untere $\lambda/4$-Plättchen 14', wobei die senkrecht polarisierte Teilwellenkomponente $y_2$ verzögert wird. Da im oberen Teil der Fig. 2 die Flüssigkristallzelle 23 nicht aktiviert sein soll, liegen nach Durchlaufen für den oberen Teilstrahl und den unteren Teilstrahl der Flüssigkristallzelle 23 gleiche Verhältnisse vor wie vor Eintritt in die Flüssigkristallzelle 23. Hat der obere Teilstrahl das obere $\lambda/4$-Plättchen 15 durchlaufen, dann ist die senkrecht polarisierte Teilwellenkomponente $y_1$ verzögert, wohingegen nach Durchlaufen des unteren Teilstrahls durch das untere $\lambda/4$-Plättchen 15' dessen horizontale Teilwellenkomponente $x_2$ verzögert ist. Bei Reflexion des oberen Teilstrahls am zweiten Strahlteiler 11 erleidet dieser Teilstrahl einen voreilenden Phasensprung um $\pi/2$, und nach Durchlaufen des oberen Teilstrahls durch den Strahlteiler 11 bleibt der obere Teilstrahl an der Lichtaustrittsstelle D in seiner Phase unbeeinflußt. Gleiches gilt für den unteren Teilstrahl nach Durchlaufen des Strahlteilers 11, wobei der untere Teilstrahl an der Lichtaustrittsstelle C unbeeinflußt bleibt. Das bedeutet, daß an der Lichtaustrittsstelle C eine Phasendifferenz von $\pi$ zwischen reflektiertem oberem Teilstrahl und hindurchlaufendem unterem Teilstrahl vorliegt; also sich beide Teilwellenkomponenten aufheben, so daß an der Lichtaustrittsstelle C keinerlei Lichtwirkung auftritt. Anders liegen die Verhältnisse an der Lichtaustrittsstelle D, an der sich die beiden Teilwellenkomponenten summieren, so daß dort der Lichtstrahl austreten kann.

Im unteren Teil der Darstellung nach Fig. 2, die die Verhältnisse bei unter Feldeinwirkung aktivierter Flüssigkristallzelle 23 zeigt, entsteht ebenfalls wieder nach Durchlaufen des ersten Strahlteilers 10 für reflektierte obere Wellenkomponente des oberen Teilstrahls ein voreilender Phasensprung von $\pi/2$, wohingegen die den ersten Strahlteiler 10 durchdringenden Wellenkomponenten $y_2$ und $x_2$ unbeeinflußt hindurchgelangen. Wie zuvor wird die horizontal polarisierte Wellenkomponente $x_1$ nach Durchlaufen des oberen $\lambda/4$-Plättchens 14 verzögert, wohingegen der untere Teilstrahl nach Durchlaufen des unteren $\lambda/4$-Plättchens 14' in seiner vertikal polarisierten Teilwellenkomponente $y_2$ verzögert wird. Nach Durchlaufen des oberen Teilstrahls durch die nunmehr aktivierte Flüssigkristallzelle 23 werden die Teilwellenkomponenten $y_1$ und $x_2$ je um 90° gedreht, wobei das gleiche für den die aktivierte Flüssigkristallzelle 23 durchlaufenden unteren Teilstrahl gilt. Nach Durchlaufen des oberen Teilstrahls durch das obere $\lambda/4$-Plättchen 15 ist dessen vertikal polarisierte Teilwellenkomponente $x_1$ verzögert, so daß nunmehr ein Phasenunterschied zwischen horizontal polarisierter Teilwellenkomponente $y_1$ und vertikal polarisierter Teilwellenkomponente $x_1$ um $\pi$ vorliegt. Nach Durchlaufen des unteren Teilstrahls durch das untere $\lambda/4$-Plättchen 15' wird dessen untere, horizontal polarisierte Teilwellenkomponente $y_2$ verzögert, so daß hier ebenfalls zwischen horizontal polarisierter Teilwellenkomponente $y_2$ und vertikal polarisierter Teilwellenkomponente $x_2$ ein Phasenunterschied von $\pi$ besteht. Da der obere Teilstrahl nach Durchlaufen des zweiten Strahlteilers 11 unbeeinflußt bleibt und der untere Teilstrahl einen Phasensprung um $\pi/2$ nach Reflexion am zweiten Strahlteiler 11 erfährt, ergibt sich ein Phasensprung $\pi$ zwischen den einzelnen Teilwellenkomponenten $y_1$ und $y_2$ sowie $x_2$ und $x_1$, was bedeutet, daß sich die beiden Teilwellenkomponenten aufheben. Umgekehrt addieren sich nach Durchlaufen des unteren Teilwellenstrahls durch den zweiten Strahlteiler 11 unbeeinflußte Phasenlagen seiner Teilwellenkomponenten $x_2$ und $y_2$, wohingegen die oberen Teilwellenkomponenten $x_1$ und $y_1$ nach Reflexion am zweiten Strahlteiler 11 einen Phasensprung um $\pi/2$ erleiden und die unteren Teilwellenkomponenten des unteren Teilstrahls $x_2$ und $y_2$ unbeeinflußt hindurchgelangen. Da sich hierbei zwischen den einzelnen Teilwellenkomponenten des unteren Teilstrahls und des oberen Teilstrahls ein Phasenunterschied von $2\pi$ ergibt, summieren sich an der Lichtaustrittsstelle C die beiden Teilstrahlen, so daß dort eine Lichtwirkung zu verzeichnen ist, wohingegen die Lichtaustrittsstelle D infolge gegenseitiger Auslöschung beider Teilstrahlen dunkel bleibt.

Damit eine Lichtweg-Umschaltung von der Lichtaustrittsstelle C zur Lichtaustrittsstelle D oder umgekehrt stattfinden kann, werden spezielle Eigenschaften der Strahlteilerschichten 10, 11 ausgenutzt. Es zeigt sich nämlich, daß das Strahlteilungsverhältnis der Strahlteilerschichten 10, 11 unkritisch ist. Strahlteilerschichten lassen sich allgemein als dielektrisches Einschichtsystem oder Mehrschichtsystem ausbilden. Weiterhin ergibt sich bei Verwenden derartiger Strahlteilerschichen kein Problem, da die Länge der Gradienten-Stablinse derart gewählt werden kann, daß der Lichtstrahleinfall auf die Strahlteilerschicht unter einem spitzen Winkel erfolgt, der eine Polarisation an der Grenzfläche zum Strahlteiler ausschließt. Um breitbandig hohe Reflexion der Strahlteilerschicht zu erreichen, muß der Gangunterschied zwischen dem an der oberen und dem an der unteren Grenzfläche reflektierten Strahl möglichst genau eine Wellenlänge oder ein Vielfaches davon betragen. Bei Reflexion am dichteren Medium, d.h. also an der Grenzfläche zwischen Gradienten-Stablinse und Strahlteilerschicht, tritt ein Phasensprung um $\pi$ auf. Die Strahlteilerschicht muß so ausgelegt sein, daß der geometrische Gangunterschied ebenfalls $\pi$ wird. Dies bedeutet, daß sich eine Phasendifferenz von $\pi/2$ zwischen reflektiertem und durchgehendem Licht ergibt. In einer symmetrischen Anordnung mit zwei derartigen Strahlteilern, wie es bei der Mach-Zehnder-Interferometeranordnung vorgegeben ist, erscheint damit an der Lichtaustrittsstelle, die jeweils mit einem einzigen Lichtdurchgang und einer einzigen Reflexion erreicht werden kann, das Licht phasengleich und damit verstärkt. An der anderen Lichtaustrittsstelle hingegen findet Auslöschung statt, da der eine Teilstrahl keine und der zweimal reflektierte Teilstrahl eine Phasenverschiebung um $\pi$ erfährt.

In Fig. 3 liegt grundsätzlich ebenfalls die in Fig. 1 gezeigte Interferometeranordnung mit den Gradienten-Stablinsenteilen 1, 2 und 3, 4 vor, zwischen denen eine Flüssigkristallzelle 23 mit den rechts und links hiervon angeordneten $\lambda/4$-Plättchen 14, 15 und 14', 15' angeordnet ist. Zum Unterschied gegenüber zuvor liegen hier die Lichteintritts- und Lichtaustrittsstellen nur auf einer Stirnfläche des linken Gradienten-Stablinsenteils 1, 2 vor und werden durch Lichtfasern eines an die Stirnfläche des oberen linken halbzylindrigen Gradienten-Stablinsenteils angesetztes Lichtfaserbündel 25 beleuchtet bzw. beaufschlagen Lichtfasern hiervon. Unter Berücksichtigung einer äußerst kleinen numerischen Apertur der einzelnen Lichtfasern des Lichtfaserbündels 25 wird der Durchmesser des Lichtfaserbündels 25 so gewählt, daß er etwa einem Viertel des Gradienten-Stablinsen-Durchmessers entspricht; wobei das Lichtfaserbündel 25 an die Stirnfläche der halbzylindrigen Gradienten-Stablinsenteilhälfte so angebracht ist, daß zumindest nahezu gleicher Abstand zur oberen Gradienten-Stablinsen-Mantellinie wie zu ihrer Schnittfläche vorliegt.

Die übrigen drei Halbstirnflächen sind je mit einem Mehrfach-Stufenspiegel 12, 17, 18 nach Art eines Echelettegitters versehen. Die Flüssigkristallzelle 23 enthält, wie aus Fig. 4 ersichtlich, zwei Flüssigkristallzellenbereiche 12, die jeweils die Abbildung des Lichtfaserbündels 25 voll zu erfassen vermögen. Die Wandungen der Flüssigkristallzellenbereiche 12 sind mit sich einander kreuzenden durchsichtigen Elektrodensätzen versehen, so daß sich die Flüssigkristallzellenbereiche 12 an hierdurch gebildeten Koordinatenstellen mit Hilfe eines hieran angeschlossenen Multiplexers 35 aktivieren lassen. Der Multiplexer 35 läßt sich ebenfalls über Lichtfasern ansteuern, die mittels photoelektrischer Umwandlung wahlweise die Elektroden zur Aktivierung der Flüssigkristallsubstanz an den jeweiligen Elektrodenkreuzungsstellen zur Bereitstellung eines jeweiligen elektrischen Feldes beaufschlagen.

Die durch das Lichtfaserbündel 25 an der Halbstirnfläche der Gradienten-Stablinsenteilhälfte 1 eingekoppelten Lichtstrahlen durchlaufen auf diese Weise je nach Ansteuerung der Elektrodenkreuzungsstellen in den Flüssigkristallzellenbereichen 12 mehrfach die Gradienten-Stablinse 1–4 infolge Reflexion an den an den übrigen Halbstirnflächen angebrachten Mehrfach-Stufenspiegeln 16 bis 18. In Fig. 5 ist ein Ausschnitt eines Mehrfach-Stufenspiegels gebracht, wobei die hierin angedeuteten Strahlwege den Versatz zwischen einfallendem und reflektiertem Lichtstrahl hervorgehen lassen. Die Mehrfach-Stufenspiegel 16 bis 18 müssen demnach ebenfalls so auf den Halbstirnflächen angebracht sein, daß die jeweilige Abbildung des Lichtfaserbündels 25 voll erfaßt werden kann.

In Fig. 6 ist schematisch angedeutet, wie die zur Umschaltung der Flüssigkristallzelle 23 erforderliche Spannung mittels photoelektrischer Energieumwandlung bereitgestellt werden kann. Über einen Steuerlichtleiter 22 wird ein Niederfrequenzgenerator 20 angesteuert, dessen Ausgänge mit beiden Elektrodenzuführungsleitungen 13 der Flüssigkristallzelle 23 verbunden sind. Sind mehrere Zuführungsleitungen zu einer entsprechenden Elektrodenpaaranzahl der Flüssigkristallzelle 23 vorgesehen, wie z.B. bei Verwenden eines Multiplexers 35, dann liegt auch eine entsprechende Anzahl von Steuerlichtleitern 22 mit jeweils zugeordneter Photodiode 21 vor. Photodioden 21 und Niederfrequenzgeneratoren 20 können in integrierter Schaltungsbauweise auf den freien Bereichen der Wandungen der Flüssigkristallzelle 23 untergebracht sein. Es versteht sich, daß in diesem Falle die Flüssigkristallzellenwandungen in entsprechendem Maße aus der Gradienten-Stablinse 1–4 herausragen können, um die Ansteuerung durch Steuerlichtleiter 22 zu ermöglichen.

Eine weitere Möglichkeit, Steuerlicht für die zur Umschaltung der Flüssigkristallzellenbereiche 12 erforderlichen Spannung bereitzustellen, besteht darin, die Photodioden 21 zwischen den Flüssigkristallbereichen 12 der Flüssigkristallzelle 23 im Bereich unmittelbar unterhalb und oberhalb der Strahlteiler 10 und 11 der Gradienten-Stablinse 1–4 anzuordnen, wobei dann die Steuerlichteintrittsstellen unmittelbar auf einer der Stirnflächen der Gradienten-Stablinse 1–4 vorzusehen sind. Dadurch, daß in diesem Falle die Steuerlichtstrahlen in Achsennähe der Gradienten-Stablinse 1–4 eingespeist werden, ergibt sich bei entsprechender Anordnung keine störende Beeinflussung der sich in der Gradienten-Stablinse 1–4 zusätzlich ausbreitenden Signallichtstrahlen.

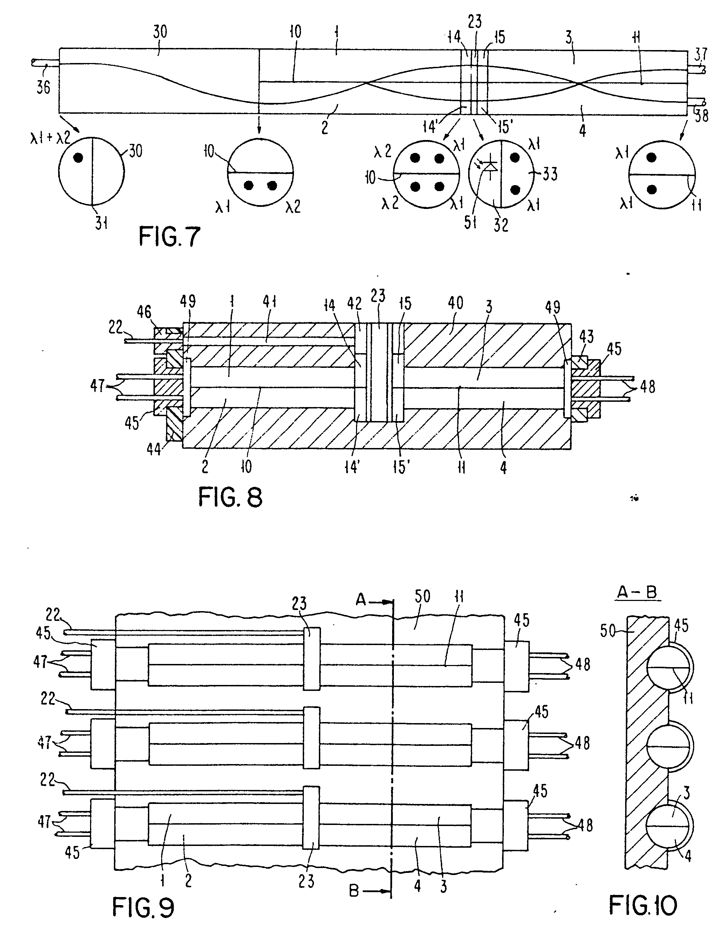

Eine grundsätzlich andere Möglichkeit zur Zuführung des für die photoelektrische Energieumwandlung erforderlichen Steuerlichts läßt sich anhand der Fig. 7 beschreiben. Hierbei sind zwei besondere, aneinander angesetzte Gradienten-Stablinsen vorgesehen, nämlich einmal die zuvor beschriebene Interferometer-Gradienten-Stablinse 1–4 und zum anderen eine zusätzliche, sich hieran in genau axialer Ausrichtung anschließende Farbstrahlteiler-Gradienten-Stablinse 30, letztere allerdings mit räumlich halber Periodenlänge. Die Farbstrahlteiler-Gradienten-Stablinse 30 weist ebenfalls eine in ihrer Achse liegende Längsschnittfläche auf, in der eine Farbstrahlteilerschicht 31 liegt, die unmittelbar an den Schnittflächen der Farbstrahlteiler-Gradienten-Stablinse anliegt. Die Farbstrahlteilerschicht 31 hat die Eigenschaft, Licht des einen Wellenlängenbereichs zu reflektieren, wohingegen Licht eines anderen Wellenlängenbereichs des Spektrums hindurchgelassen wird. Derartige Farbstrahlteilerschichten sind an sich bekannt (siehe z.B. «Siemens Forsch.- und Entwickl.-Ber., Bd. 8 (1979), Nr. 3, Seiten 130 bis 135) und brauchen deshalb hier nicht weiter beschrieben zu werden.

Die beiden Gradienten-Stablinsen 30 und 1–4 sind in genau axialer Ausrichtung derart mit ihren Stirnflächen aneinandergesetzt, daß die Farbstrahlteilerschicht 31 genau senkrecht zu den Strahlteilerschichten 10 und 11 in der Interferometer-Gradienten-Stablinse 1–4 ausgerichtet ist. An der freien Stirnhalbfläche der Farbstrahlteiler-Gradienten-Stablinse 30 ist die Lichteintrittsstelle vorgesehen, an die ein Lichtleiter 36 angesetzt ist. Die Lichteintrittsstelle ist gegenüber der Gradienten-Stablinsenachse versetzt so angeordnet, daß die durch den Lichtleiter 36 beaufschlagte Lichteintrittsstelle auf einer der Stirnflächenhälften der Gradienten-Stablinse 1–4 abgebildet wird. Im Zwischenraum der Interferometer-Gradienten-Stablinse 1–4 befindet sich zwischen den $\lambda/4$-Plättchen 14, 14' und 15, 15' eine plattenförmige Anordnung 50, die in zwei Hälften 32 und 33 eingeteilt ist, deren Trennfläche, durch die Achse der Interferometer-Gradienten-Stablinse 1–4 verlaufend, senkrecht zu den Strahlteilern 10 und 11 ausgerichtet ist. Die eine Hälfte 32 der plattenförmigen Anordnung 50 besitzt in den Abbildungsbereichen des Lichtleiters 36 je eine Photodiode oder besteht, diese Abbildungsbereiche umfassend, nur aus einer einzigen Photodiode 51. Außerdem kann in dieser einen Hälfte 32 noch ein Niederfrequenzgenerator integriert sein, der die zur Steuerung der Flüssigkristallzellenbereiche erwünschte Wechselspannung liefert. Die andere Hälfte 33 der plattenförmigen Anordnung 50 enthält zumindest in den Abbildungsbereichen der Lichteintrittsstellen 36 Flüssigkristallzellenbereiche, deren Elektroden mit nicht gezeigten, entsprechenden Anschlußstellen auf der einen Hälfte 32 verbunden sind. Die freie Stirnfläche am Ende der Interferometer-Gradienten-Stablinse 1–4 hat an den hierauf abgebildeten Lichteintrittsflächen als Lichtaustrittsflächen entsprechend angesetzte Lichtleiter 37 und 38, die sich unter Steuerung der Interferometer-Gradienten-Stablinse 1–4 wahlweise mit Licht beaufschlagen lassen.

Die Betriebsweise läßt sich anhand der Querschnittsdarstellungen im unteren Teil der Fig. 7 erläutern. An der freien Stirnfläche der Farbstrahlteiler-Gradienten-Stablinse 30 wird über einen an die Lichteintrittsstelle versetzt zur Achse und zur Schnittfläche 31 angesetzten Lichtleiter 36 Licht mit den Wellenlängenbereichen $\lambda 1$ und $\lambda 2$ zugeführt. Diese Lichteintrittsstelle wird auf der an die Farbstrahlteiler-Gradienten-Stablinse 30 angesetzten Interferometer-Gradienten-Stablinse 1–4 zweifach abgebildet, und zwar links unten an der Lichteintrittsstelle der Interferometer-Gradienten-Stablinse 1–4 für den an der Farbstrahlteilerschicht 31 reflektierten Wellenlängenbereich $\lambda 1$ und rechts unten an der Lichteintrittsstelle der Interferometer-Gradienten-Stablinse 1–4 für den durch die Farbstrahlteilerschicht 31 hindurchgelangenden Lichtwellenlängenbereich $\lambda 2$. Der Lichtstrahl des Wellenlängenbereichs $\lambda 1$ wird über den Strahlteiler 10 der Interferometer-Gradienten-Stablinse wie zuvor in einen reflektierten und einen durchgelassenen Teilstrahl $\lambda 1$ aufgeteilt, die beide auf die rechte Hälfte 33 der plattenförmigen Anordnung 50 mit den Flüssigkristallbereichen gelangen, wohingegen die Teilstrahlen $\lambda 2$ die Photodioden 51 auf der linken Hälfte 32 beaufschlagen. Nach Durchlaufen der Teilstrahlen durch die Flüssigkristallbereiche und die entsprechenden $\lambda/4$-Plättchen 15 und 15' gelangen die vereinigten Teilstrahlen $\lambda 1$ entweder auf den Ausgangslichtleiter 37 oder 38, je nachdem ob der bzw. die Flüssigkristallbereiche aktiviert sind oder nicht.

Zur elektrischen Feldsteuerung des jeweiligen Zustands der Flüssigkristallbereiche enthält der Eintrittslichtstrahl über Lichtleiter 36 an der Farbstrahlteiler-Gradienten-Stablinse 30 entweder beide Lichtwellenbereiche $\lambda 1$ und $\lambda 2$, so daß die Flüssigkristallbereiche infolge Erregung der Photodioden 51 auf dem Teil 32 aktiviert werden oder nur einen Lichtwellenbereich $\lambda 1$ mit der Folge, daß die Flüssigkristallbereiche inaktiv bleiben, weil kein Lichteinfall auf die Dioden 51 stattfindet. Auch hier wiederum ist es klar, daß die freie Stirnfläche der Farbstrahlteiler-Gradienten-Stablinse 30 mit mehreren Lichteintrittsstellen versehen sein kann, die entsprechend versetzt zur Gradienten-Stablinsenachse vorliegen müssen.

Eine Interferometeranordnung, die grundsätzlich sowohl zur Lichtweg-Umschaltung als auch als Interferenzrefraktor Verwendung finden kann, läßt sich, wie aus Fig. 8 ersichtlich, in denkbar einfacher Weise realisieren. Hierzu dient ein Block 40, der mit einer Bohrung versehen ist, deren Durchmesser exakt dem Durchmesser der hierin einzusetzenden Gradienten-Stablinse 1–4 entspricht. Die Länge des Blocks 40 ist gleich der Länge der hierin einzusetzenden Gradienten-Stablinse 1–4 plus der Breite des Zwischenraums zur Aufnahme des Mediums oder der Flüssigkristallzelle 23 zusammen mit den $\lambda/4$-Plättchen 14, 15, 14', 15', falls im letzteren Falle die Interferometeranordnung als Lichtweg-Umschalter dienen soll. Der Block 40 enthält demgemäß in seiner Mitte eine Nut, die senkrecht zur Gradienten-Stablinsenachse ausgerichtet ist. Die beiden Gra-

dienten-Stablinsenteile 1, 2 und 3, 4 sind jeweils an einem Ende mit einem Flansch 49 versehen, der in eine entsprechende ringförmige Ausnehmung zu beiden Seiten des Blocks 40, genau passend und mit den Stirnflächen des Blocks 40 fluchtend, bei eingelegten Gradienten-Stablinsenteilen 1, 2 und 3, 4 eingelassen ist.

Der Flansch 49 kann entweder vor Einsetzen der Gradienten-Stablinsenteile 1, 2 und 3, 4 hieran angebracht werden oder, insbesondere bei aufeinanderfolgendem Einsetzen der einzelnen Gradienten-Stablinsenteilhälften 1, 2, 3, 4, erst nach ihrem Justieren in der Bohrung so, daß die betreffenden Endflächen der Gradienten-Stablinsenteilhälften 1, 2, 3, 4 mit den Seitenwandungen der Nut in der Mitte des Blocks 40 zumindest in etwa fluchten bzw. ohne Freilassen eines Zwischenraums an die Wandungsflächen der in diese Nut eingesetzten Flüssigkristallzelle 23 anstoßen. Es versteht sich natürlich, daß auch im letzteren Falle die betreffenden Endflächen der Gradienten-Stablinsenteilhälften 1, 2, 3, 4 zur Erzeugung polarisations-unabhängiger Phasenverschiebung hergerichtet sein müssen.

Ein Ring 43 wird dann auf der rechten Stirnfläche des Blocks 40 befestigt, so daß der rechte Gradienten-Stablinsenteil 3, 4 fest in der Blockbohrung verankert ist, dessen dem genannten Zwischenraum in der Gradienten-Stablinse 1–4 zugewandte Endfläche mit der betreffenden Nutwandung ebenso fluchtet bzw. an die eingesetzte Flüssigkristallzelle 23 anstößt wie die Endfläche des linken Gradienten-Stablinsenteils 1, 2. Neben seiner Aufgabe zur Verankerung des rechten Gradienten-Stablinsenteils 3, 4 dient der Ring 43 noch zur Aufnahme eines Anschlußteils 45, in das die Lichtleiter 48, wie an sich bekannt, eingekittet sind. Eine Steckverbindung dieser Art läßt sich der Veröffentlichung von L. Balliet u.a. im «IBM Technical Disclosure Bulletin», Bd. 24 Heft 2, Juli 1981, auf den Seiten 1154 und 1155, unter dem Titel «Low cost fiber-optic connectors» entnehmen. Das Anschlußstück 45 wird fest in die Ringöffnung eingepreßt, so daß ein unmittelbarer Kontakt zwischen den Lichtleitern 48 und dem Gradienten-Stablinsenteil 3, 4 gewährleistet ist.

Auf der linken Seite ist ebenfalls ein Befestigungsring 44 zur Verankerung des linken, im Bereich seiner Stirnfläche ebenfalls mit einem Flansch versehenen Gradienten-Stablinsenteils 1, 2 angebracht, in dessen Zentralöffnung natürlich auch ein Anschlußstück 45 mit hierin befestigten Lichtleitern 47 eingesetzt ist.

Soll das Interferometer als Lichtweg-Umschalter eingesetzt werden, dann müssen zusätzlich zur oben erwähnten Mittelnut noch Maßnahmen zum Bereitstellen der für die Felderregung der Flüssigkristallzelle 23 erforderlichen Spannung vorgesehen werden. Neben der zentralen Öffnung im linken Ring 44 befindet sich hierin eine exzentrisch angeordnete weitere Öffnung, die zur Aufnahme eines weiteren Anschlußstücks 46 dient, in das der Steuerlichtleiter 22 eingesetzt ist. Der Steuerlichtleiter 22 steht nach Einsetzen des Anschlußstücks 46 in unmittelbarem Kontakt mit einem internen Lichtleiter 41, der in axialer Ausrichtung in einer hieran angepaßten Bohrung 41 im Block 40 liegt.

In die genannte Mittelnut des Blocks 40 wird dann eine Flüssigkristallzelle 23 neben an den betreffenden Endflächen der Gradienten-Stablinsenteilhälften vorgesehenen λ/4-Plättchen 14, 15, 14′, 15′ gemäß oben beschriebener Anordnung eingesetzt. Auch hier wiederum ist Vorsorge dafür getroffen, daß im wesentlichen kein Zwischenraum zwischen den Gradienten-Stablinsenteilen 1, 2 und 3, 4 und der eingesetzten Flüssigkristallzelle 23 besteht. Ein derartiger Lichtweg-Umschalter läßt sich sehr klein ausführen, beispielsweise in der Größenordnung von 1 cm Länge, so daß hiermit eine Vielfalt von Verwendungsmöglichkeiten vorliegt.

Zum Zusammenbau eines Interferometers gemäß der Erfindung werden also, wie oben beschrieben, entweder bereits zusammengeklebte Gradienten-Stablinsenteile 1, 2 und 3, 4 in besagte Bohrungen des Blocks 40 eingeführt oder aber die Gradienten-Stablinsenteilhälften 1, 2, 3, 4 mit entsprechend, wie oben beschrieben, dazwischenliegenden Strahlteilerschichten 10, 11 einzeln in die exakt angepaßte Bohrung eingebracht, so daß sie sich dort erst zu den beiden Gradienten-Stablinsenteilen 1, 2 und 3, 4 zusammenfügen.

Eine andere Möglichkeit zur Herstellung eines Gradienten-Stablinsen-Interferometers besteht darin, den Block 40 so in zwei Teilblöcke aufzuteilen, daß die genannte Bohrung zur Aufnahme der Gradienten-Stablinsenteile 1, 2 und 3, 4 durch in beide Teilblöcke eingelassene Ausnehmungen halbkreisförmigen Querschnitts mit gleichem Radius wie der der Gradienten-Stablinse gebildet wird. Auch in diesem Falle lassen sich die Gradienten-Stablinsenteilhälften 1, 2, 3, 4 jeweils einzeln in die Ausnehmungen eines der Teilblöcke einlegen, doch so, daß die Flächen der Strahlteilerschichten 10, 11 im wesentlichen senkrecht zur Blockgrundfläche ausgerichtet sind.

Zur Vervollständigung des Interferometers wird der Teilblock mit hierin eingelegten Gradienten-Stablinsenteilen 1, 2 und 3, 4 vom zweiten Teilblock abgedeckt, so daß eine Art Selbstjustage des Interferometers während des Zusammenbaus vorgenommen wird. Allerdings immer vorausgesetzt, daß die Ausnehmungen halbkreisförmigen Querschnitts im zweiten Teilblock ebenso an die eingelegte Gradienten-Stablinse 1–4 angepaßt sind wie die des ersten Teilblocks.

Der Steuerlichtleiter 41 kann als solcher ebenfalls als Gradienten-Lichtleiter ausgebildet sein, um eine Photodiodenanordnung 42 in dem zusätzlich noch die Flüssigkristallzelle 23 zusammen mit den λ/4-Plättchen enthaltenden Einsatz in der Mittelnut wirkungsvoll zu beleuchten. In diesen Mittelnut-Einsatz kann neben der Photodiodenanordnung 42 auch noch der Niederfrequenzgenerator integriert sein, der zwischen den Elektroden der Flüssigkristallzelle 23 und der Photodiodenanordnung 42 geschaltet ist. Der Lichtleiter 41 kann zur Erhöhung der Wirkung durch die eine Gradientenfaser enthaltende Lichtfaser 22 beleuchtet werden.

Bei Verwenden der in Fig. 8 gezeigten Anordnung als Interferenzrefraktor entfallen neben den λ/4-Plättchen sowohl der die Flüssigkristallzelle 23 enthaltende Einsatz in der genannten Mittelnut des Blocks 40 als auch der Anschluß 46 des Lichtleiters 22. Der untere Teil der Mittelnut im Block 40 kann, falls erforderlich, gegen ein Einbringen des zu messenden Mediums oder des zu untersuchenden Objekts geschützt sein, so daß der Strahlengang in den unteren Gradienten-Stablinsenteilhälften 2, 4 einen ungestörten Verlauf besitzt. Auch hier wiederum gestattet eine Miniaturausführung des erfindungsgemäßen Interferenzrefraktors einen Einsatz an bisher unzugänglichen Stellen.

Es dürfte ohne weiteres klar sein, daß zwecks Verwendung als Lichtweg-Umschalter die in Fig. 8 gezeigte Anordnung in entsprechender Abwandlung auch zur Aufnahme eines Gradienten-Stablinsen-Interferometers zusammen mit einer Farbteiler-Gradienten-Stablinse gemäß Fig. 7 ausgebaut werden kann. Auf diese Weise ist gewährleistet, daß ohne weiteres eine exakte axiale Ausrichtung zwischen der Farbstrahlteiler-Gradienten-Stablinse und der Interferometer-Gradienten-Stablinse zustande kommt. Hinzu kommt, daß sich insofern noch eine Vereinfachung ergibt, als jeweils nur eine Bohrung bzw. Ausnehmung halbkreisförmigen Querschnitts mit dem gemeinsamen Radius der Gradienten-Stablinsen in einem Block 40 bzw. Teilblock vorgesehen zu werden braucht, da die in die Mittelnut eingesetzte Gesamtheit, bestehend aus einer plattenförmigen Anordnung von einer Flüssigkristallzelle 23 mit den $\lambda/4$-Plättchen 14, 15, 14′, 15′, ohne weiteres den gleichen Durchmesser wie die Gradienten-Stablinsen besitzen kann. Zur Befestigung dieser Gradienten-Stablinsenkombination im Block 40 bzw. in Teilblöcken können die gleichen Maßnahmen dienen, wie sie im Zusammenhang mit Fig. 8 beschrieben sind, indem nämlich an die freien Enden der zusammengesetzten Gradienten-Stablinsen Flansche 49, z.B. durch Aufkleben, angebracht werden, die entsprechenden ringförmigen Ausnehmungen an den Endflächen des Blocks 40 angepaßt sind, so daß nach Aufsetzen der Ringe 43 wie zuvor jeweils eine feste Verankerung gewährleistet ist.

Falls der Block 40 in Teilblöcke aufgeteilt ist, wird auch hier wiederum nach Einlegen der Gradienten-Stablinsen in den ersten Teilblock das ganze durch einen weiteren Teilblock mit gleichen Ausnehmungen abgedeckt, so daß die Gradienten-Stablinsen nicht nur fest verankert, sondern darüber hinaus noch selbstjustiert sind.

Eine Realisierungsmöglichkeit zur Schaffung eines Vielfach-Lichtweg-Umschalters läßt sich der Fig. 9 entnehmen. Ein Teilblock 50 enthält eine Anzahl von Ausnehmungen halbkreisförmigen Querschnitts, die den hierin einzulegenden Gradienten-Stablinsen-Interferometern in ihren Radien wie zuvor erwähnt genau angepaßt sind. Die Gradienten-Stablinsen-Interferometer ragen nach Einlegen in diese Ausnehmungen bezüglich ihres Durchmessers genau zur Hälfte hieraus heraus, so daß auch hier sowohl nach Auflegen eines nicht gezeigten oberen Teilblockes als Deckplatte mit Ausnehmungen gleicher Abmessungen und Abstände als auch gegenseitiger Befestigung der beiden Blöcke ein kompakter Vielfach-Lichtweg-Umschalter vorliegt.

Die Ausnehmungen halbkreisförmigen Querschnitts zur Aufnahme der Gradienten-Stablinsen sind zur Bereitstellung des genannten Zwischenraums genau in der Mitte zwischen den Gradienten-Stablinsen-Stirnflächen erweitert, um die Flüssigkristallzellen 23 mit Photodiodenteil aufnehmen zu können. Der Photodiodenteil ist dabei jeweils derart an der zugeordneten Flüssigkristallzelle 23 angebracht, daß die jeweilige, durch einen vorzugsweise als Gradienten-Lichtleiter ausgebildeten Steuerlichtleiter 22 erregte Photodiode die zugeordnete Flüssigkristallzelle 23 beaufschlagen kann. Auch für die Steuerlichtleiter 22 sind halbkreisförmige Nuten vorgesehen, derart, daß die hierin eingelegten Steuerlichtleiter 22 nach Auflegen des hier nicht gezeigten oberen Teilblocks fest verankert sind. Die Steuerlichtleiter 22 sowie die wie oben vorgesehenen Anschlußstücke 45 zur Aufnahme der Signallichtleiter 47 und 48 können an den betreffenden Stirnflächen mittels Klebverbindung angesetzt sein. Die Flansche 49 an den Anschlußstücken der Lichtleiter 47 und 48 gewährleisten gleichzeitig, daß die Gradienten-Stablinsen im Teilblock 50 nach Aufbringen des nicht gezeigten oberen Teilblocks als Deckplatte fest verankert liegen.

Der Teilblock 50, ebenso wie der genannte obere Teilblock, kann aus elastischem Material bestehen, so daß der Vielfach-Lichtweg-Umschalter beim Anbringen an die jeweiligen örtlichen Verhältnisse weitgehend anpassungsfähig ist.

Die in Fig. 9 gezeigte Anordnung stützt sich zwar auf die Verwendung von Teilblöcken mit entsprechenden Ausnehmungen zur Aufnahme der Gradienten-Stablinsen, jedoch kann auch hier ebensogut in entsprechender Abwandlung der in Fig. 8 gezeigten Anordnung nur ein einzelner Block mit entsprechenden Bohrungen zur Aufnahme der Gradienten-Stablinsen und der Steuerlichtleiter verwendet werden.

Mit einem Raster aus Flüssigkristallzellen und einem System, aufgebaut in einer Anordnung nach Fig. 9, läßt sich eine praktisch beliebige Anzahl von Umschaltern zusammenfassen. Die minimal zu erzielenden Abmessungen lassen sich abschätzen, wenn folgende Punkte berücksichtigt werden: Die aktive Fläche der Flüssigkristallzelle muß mindestens doppelt so groß sein wie das Abbild der Lichtfaser an der Lichteintrittsstelle. Erfolgen die Abbildungen der Lichtfaserfläche im Maßstab 1:1, so ist demnach bei einem Lichtfaserdurchmesser von z.B. 50 $\mu$m eine Fläche der Flüssigkristallzelle mit 100 $\mu$m Kantenlänge für diese Zwecke ausreichend. Das bedeutet, daß bei kompakter Aufbauordnung $10^4$ Zellen pro cm² unterzubringen sind. Zur Ansteuerung einer Flüssigkristallzelle sind Leistungen in der Größenordnung von einigen nW erforderlich. Eine derart geringe Schaltleistung läßt sich leicht mit einem als Glasfaser ausgebildeten Steuerlichtleiter übertragen. Die von der Photodiodenanordnung abgegebene Spannung kann mit Hilfe bekannter Maßnahmen, z.B. einer Zenerdiode, spannungsstabilisiert sein.

Die Hintereinanderschaltung von Lichtweg-Umschalter gemäß der Erfindung oder die Mehrfachübertragung der Lichtstrahlen innerhalb einer einzigen Gradienten-Stablinse, wie es bei einer Anordnung nach Fig. 3 erfolgt, hängt u.a. von den Transmissionsverlusten ab, d.h. die Anzahl der Durchgänge bzw. der Lichtweg-Umschalter in Serie wird durch die Summe der Transmissionsverluste begrenzt und auch durch Abbildungsfehler, die aber prinzipiell recht niedrig gehalten werden können. Bei der Kleinheit der einzelnen Flüssigkristallzellen bzw. -bereiche und der geringen erforderlichen Stromdichte zu ihrer Ansteuerung lassen sich die Elektroden der Flüssigkristallzelle als Liniengitter ausbilden, so daß deren Lichtdurchlässigkeit als maximal anzusehen ist.

## Patentansprüche

1. Interferometeranordnung mit einem Interferometer nach Mach-Zehnder, welche mindestens eine Lichteintrittsstelle (A und/oder B) für senkrecht zueinander polarisierte Lichtstrahlen aufweist, sowie mindestens zwei Lichtaustrittsstellen (C, D), denen durch zwei Strahlteiler (10, 11) vorgegebene Lichtwege zur Führung von Teilstrahlen (6, 7; 8, 9) zugeordnet sind, wobei die Teilstrahlen durch ein im Strahlengang einfügbares Medium (14, 14', 15, 15', 12) zur optischen Weglängenbeeinflussung unterschiedlich beaufschlagbar sind, gekennzeichnet durch eine Gradienten-Stablinse (1–4),

– deren Länge einer ganzen räumlichen Periodenlänge (P) eines sich zwischen ihren beiden Stirnflächen auf im wesentlichen sinusförmigem Lichtweg wellenlängen-unabhängig ausbreitenden Lichtstrahls entspricht,

– die bezüglich der Richtung ihrer Längsachse symmetrisch in Gradienten-Stablinsenteilhälften (1, 2, 3, 4) geteilt ist, wobei die Lichteintritts- (A, B) und Lichtaustrittsstellen (C, D) zu den sich auf den Stirnflächen ergebenden Schnittlinien versetzt sind,

– die zwischen den so gebildeten Längsschnittflächen einen hieran unmittelbar anliegenden, diese völlig bedeckenden, schichtförmigen Strahlteiler (10, 11) enthält und

– die einen sich vom Stablinsenaußenrand über den Strahlengang innerhalb der Gradienten-Stablinse (1–4) erstreckenden, im wesentlichen senkrecht zum Strahlteiler (10, 11) liegenden Zwischenraum besitzt, so daß

– zu dessen beiden Seiten je ein Gradienten-Stablinsenteil (1, 2 und 3, 4) mit zumindest angenähert halber räumlicher Periodenlänge (P/2) liegt, wobei der Zwischenraum zur Aufnahme des Mediums (14, 14', 15, 15', 12) zwecks Unterbrechung des Lichtwegs zu einer der beiden Lichtaustrittsstellen in Abhängigkeit vom jeweiligen Mediumszustand dient.

2. Interferometeranordnung nach Anspruch 1, dadurch gekennzeichnet, daß für eine Verwendung als Lichtwegumschalter in den Zwischenraum

– wahlweise elektrisch ansteuerbare, die Polarisation unter elektrischer Feldeinwirkung um 90° drehende Flüssigkristalle (12) eingesetzt sind, deren jeweilige Fläche mindestens doppelt so groß wie die der Abbildung der betreffenden Lichteintrittsstelle (A oder B) ist und daß

– jeweils zwischen den Flüssigkristallen (12) und den Halbquerschnittsflächen der Gradienten-Stablinsenteilhälften (1, 2, 3, 4) λ/4-Plättchen (14, 15 und 14', 15') angeordnet sind, so daß sowohl die sich über den Flüssigkristallbereich (12) hinweg einander gegenüberliegenden als auch die jeweils auf einer Seite der Flüssigkristallbereiche (12) nebeneinanderliegenden λ/4-Plättchen (14, 14' und 15, 15') jeweils unterschiedlich polarisierte Wellenkomponenten verzögern.

3. Interferometeranordnung nach Anspruch 2, dadurch gekennzeichnet,

– daß auf den beiden Halbflächen einer der beiden Stirnflächen der Gradienten-Stablinse (1–4) Mehrfach-Stufenspiegel (17, 18) in Form von Echelettegittern angeordnet sind,

– daß auf einer ersten Halbfläche der anderen Stirnfläche der Gradienten-Stablinse (1–4) ein weiterer derartiger Mehrfach-Stufenspiegel (16) angebracht ist,

– daß mitten an die zweite Halbfläche der anderen Stirnfläche der Gradienten-Stablinse (1–4) ein aus Signallichtleitern bestehendes, die Lichtein- und Lichtaustrittsstellen darstellendes Lichtfaserbündel (25) angesetzt ist,

– dessen Durchmesser etwa halb so groß wie der Radius der Stirnfläche der Gradienten-Stablinse (1–4) ist,

– daß die beiden Flüssigkristallbereiche (12) Wandungen aufweisen, die mit sich kreuzenden, jeweils aus zueinander parallelen und durchsichtigen Elektroden bestehenden Elektrodensätzen belegt sind,

– so daß sich zwei Schalt-Matrixfelder ergeben, die im Strahlengang zwischen den frontal gegenüberliegenden λ/4-Plättchen (14, 15, 14', 15') liegen, und

– daß ein Adressiermultiplexer (35) mit seinen Ausgängen zur Koordinatenauswahl von Elektrodenkreuzungspunkten der Schalt-Matrixfelder an die Elektrodensätze der Flüssigkristallbereiche (12) angeschlossen ist.

4. Interferometeranordnung nach Anspruch 2 oder 3, dadurch gekennzeichnet, daß die zum wahlweisen Anlegen eines elektrischen Feldes an die Flüssigkristallbereiche (12) erforderliche Spannung aus photoelektrischer Energieumwandlung hervorgeht.

5. Interferometeranordnung nach Anspruch 4, dadurch gekennzeichnet, daß zur Zuführung des für die photoelektrische Energieumwandlung notwendigen Lichtes mindestens ein Steuerlichtleiter (22) dient.

6. Interferometeranordnung nach den Ansprüchen 4 und 5, dadurch gekennzeichnet,

– daß mindestens ein Steuerlichtleiter an eine der Gradienten-Stablinsen-Stirnflächen im Bereich der Gradienten-Stablinsen-Längsschnittflächen angesetzt ist,

– daß in durch die Steuerlichtleiter bedingten Lichtwegen zwischen den beiden Flüssigkristallbereichen (12) in einer Ebene hiermit Photodiodenflächen liegen und

– daß die Lichteintritts- (A, B) und Lichtaustrittsstellen (C, D) der Signallichtstrahlen auf getrennten Stirnflächen der Gradienten-Stablinse (1 bis 4) vorgesehen sind.

7. Interferometeranordnung nach einem der Ansprüche 1 bis 6, dadurch gekennzeichnet,

– daß unmittelbar anschließend an eine der Stirnflächen der die Interferometeranordnung bildenden Gradienten-Stablinse (1–4) die Stirnfläche eines Farbstrahlteilers in Form einer genau in der Längsachse symmetrisch geteilten weiteren Gradienten-Stablinse (30) von räumlich halber Periodenlänge (P/2) und mit auf einer der Halbflächen ihrer freien Stirnfläche in gewissem Abstand von den Längsschnittflächen angeordneter Lichteintrittsstelle in genau axialer Ausrichtung der beiden Gradienten-Stablinsen (1–4 und 30) zueinander liegt,

– daß unmittelbar zwischen den Längsschnittflächen der Farbstrahlteiler-Gradienten-Stablinse (30) eine senkrecht zur Strahlteilerschicht (10, 11) der Interferometer-Gradienten-Stablinse (1–4) ausgerichtete Farbstrahlteilerschicht (31) liegt und

– daß die in die Interferometer-Gradienten-Stablinse (1–4) zur Aufnahme des Mediums eingebrachte Mittelnut in zwei zumindest etwa gleiche Hälften (32, 33) sowohl senkrecht zur Strahlteilerschicht (10, 11) als auch in Richtung der Längsachse der Interferometer-Gradienten-Stablinse (1–4) geteilt ist, von welchen die eine Hälfte (32) ein photoelektrisches Schaltelement im Strahlengang und die andere Hälfte die vier λ/4-Plättchen (14, 14', 15, 15') mit den dazwischenliegenden Flüssigkristallbereichen (12) enthält.

8. Interferometeranordnung nach den Ansprüchen 1 bis 7, dadurch gekennzeichnet, daß zwischen der oder den Photodioden und den Feldanlegenden Elektroden der Flüssigkristallbereiche (12) ein Niederfrequenzgenerator (20) geschaltet ist.

9. Interferometeranordnung nach den Ansprüchen 1 bis 8, dadurch gekennzeichnet, daß die Strahlteiler (10, 11, 31) aus dielektrischen Schichten bestehen.

10. Interferometeranordnung nach einem der Ansprüche 1 bis 9, dadurch gekennzeichnet, daß die Lichtleiter (24, 26, 37, 38) durch an die Lichteintritts- und -austrittsstellen angesetzte Lichtfasern dargestellt sind.

11. Interferometeranordnung nach den Ansprüchen 1 bis 10, gekennzeichnet durch die Verwendung als elektrisch oder optisch steuerbaren Lichtweg-Umschalter mit homogen orientierte, verdrillte, nematische Schichten enthaltender Flüssigkristallzelle.

**Claims**

1. Interferometer arrangement comprising a Mach-Zehnder interferometer having at least one light input port (A and/or B) for light beams perpendicularly polarized to each other, and at least two light output ports (C, D) to which are associated by two beam splitters (10, 11) predetermined light paths for guiding partial beams (6, 7; 8, 9), with the partial beams being differently affectable by a medium (14, 14', 15, 15', 12) introducible in the beam path for influencing the length of the optical path, characterized by a GRIN rod lens (1–4),

– whose length corresponds to one full spatial period (P) of a light beam propagating between its two front fraces on a substantially sinus-shaped light path and in a wave length-independent mode,

– which is symmetrically divided, with respect to the direction of its longitudinal axis, into GRIN rod lens part halves (1, 2, 3, 4) with the light input (A, B) and light output ports (C, D) being shifted relative to the separating lines on the front faces,

– which comprises, between the thus formed longitudinal sectional surfaces, a layer-shaped beam splitter (10, 11) immediately adjacent thereto and completely covering it, and

– which has an intermediate space extending from the outer GRIN rod lens rim over the beam path within the GRIN rod lens (1–4), arranged substantially perpendicular to the beam splitter (10, 11) so that

– to both sides of the latter one respective GRIN rod lens part (1, 2 and 3, 4) with at least approximately half the length of a period (P/2) is provided, the intermediate space serving to receive the medium (14, 14', 15, 15', 12) for interrupting the light path toward one of the two light output ports, depending on the respective state of the medium.

2. Interferometer arrangement as claimed in Claim 1, characterized in that for its use as a light path switch

– selectively electrically controllable liquid crystals (12) rotating the polarization by 90 degrees under the influence of an electric field are inserted in the intermediate space whose respective surface is at least twice as big as that of the image of the respective light input port (A or B), and that

– quarter wave plates (14, 15 and 14', 15') are respectively arranged between the liquid crystals (12) and the cross section surfaces of the GRIN rod lens part halves (1, 2, 3, 4) so that the quarter wave plates (14, 15 and 14', 15') which are provided opposite each other over the liquid crystal regions (12) as well as beside each other on one respective side of the liquid crystal regions (12) respectively delay differently polarized wave components.

3. Interferometer arrangement as claimed in claim 2, characterized in that

– on the two half surfaces of one of the two front surfaces of the GRIN rod lens (1–4) multiple step mirrors (17, 18) in the form of Echelette gratings are arranged

– that on a first half surface of the other front surface of the GRIN rod lens (1, 4) another such multiple step mirror (16) is provided

– that in the middle of the second half surface of the other front surface of the GRIN rod lens (1–4) a bundle of optical fibers (25) consisting of signal light guides and representing the light input and light output ports is provided

– whose diameter equals approximately half the radius of the front surface of the GRIN rod lens (1–4)

– that the two liquid crystal regions (12) have walls covered with sets of electrodes crossing each other and respectively consisting of transparent electrodes arranged in parallel to each other

– so that two matrix switching fields are obtained situated in the beam path between the quarter wave plates (14, 15, 14', 15') facing each other, and

– that an addressing multiplexor (35) is connected with its outputs for the coordinate selection of electrode crossing points of the matrix switching fields, to the electrode sets of the liquid crystal regions (12).

4. Interferometer arrangement in accordance with claim 2 or 3, characterized in that the voltage required for the selective application of an electric field to the liquid crystal regions (12) originates from a photoelectric energy conversion.

5. Interferometer arrangement as claimed in claim 4, characterized in that for supplying the light necessary for photoelectric energy conversion at least one control light guide (22) is used.

6. Interferometer arrangement as claimed in any one of claims 4 and 5, characterized in that
– at least one control light guide is applied to one of the GRIN rod lens front surfaces in the region of the longitudinal GRIN rod lens front surfaces in the region of the longitudinal GRIN rod lens sections
– that in the light paths defined by the control light guides, between the two liquid crystal regions (12) photodiode surfaces are provided on one level therewith, and
– that the light input (A, B) and light output ports (C, D) of the signal light beams are provided on separate front surfaces of the GRIN rod lens (1 to 4).

7. Interferometer arrangement as claimed in one of claims 1 to 6, characterized in that
– immediately adjacent to one of the front surfaces of the GRIN rod lens (1–4) representing the interferometer arrangement the front surface of a colour beam splitter is provided in the form of a further GRIN rod lens (30) symmetrically divided precisely in the longitudinal axis, with half the length of the period (P/2), and with a light input port provided on one of the half surfaces of its free front face at a predetermined distance from the longitudinal sections, in precisely axial alignment of the two GRIN rod lenses (1 to 4 and 30) to each other,
– that immediately between the longitudinal sections of the colour beam splitter GRIN rod lens (30) a colour beam splitter layer (31) aligned perpendicularly to the beam splitter layer (10, 11) of the interferometer GRIN rod lens (1–4) is provided, and
– that the central groove made in the interferometer GRIN rod lens (1–4) to receive the medium is divided into two at least approximately equal halves (32, 33) perpendicularly to the beam splitter layer (10, 11) as well as in the direction of the longitudinal axis of the interferometer GRIN rod lens (1–4), one half (32) comprising a photoelectric switching element in the beam path, and the other half the four quarter wave plates (14, 14', 15, 15') with the interposed liquid crystal regions (12).

8. Interferometer arrangement as claimed in any one of claims 1 to 7, characterized in that between the photodiode or diodes and the field-applying electrodes of the liquid crystal regions (12) a low frequency generator (20) is arranged.

9. Interferometer arrangement as claimed in any one of claims 1 to 8, characterized in that the beam splitters (10, 11, 31) consist of dielectric layers.

10. Interferometer arrangement as claimed in one of claims 1 to 9, characterized in that the light guides (24, 26, 37, 38) are represented by optical fibers applied to the light input and light output ports.

11. Interferometer arrangement as claimed in any one of claims 1 to 10, characterized by its use as an electrically or optically controllable light path switch, with a liquid crystal cell comprising homogeneously oriented, twisted nematic layers.

**Revendications**

1. Dispositif interférométrique à interféromètre de Mach-Zehnder, qui comporte au moins un point d'entrée de la lumière (A et/ou B) pour des faisceaux lumineux polarisés perpendiculairement l'un par rapport à l'autre ainsi qu'au moins deux points de sortie de la lumière (C, D), auxquels sont associés des chemins optiques prédéterminés par deux diviseurs de faisceaux (10, 11) pour le guidage de faisceaux divisés (6, 7; 8, 9), les faisceaux divisés pouvant subir une influence différente d'un milieu (14, 14', 15, 15', 12) pouvant être inséré sur le trajet des rayons pour agir sur la longueur du chemin optique, caractérisé par une lentille-barreau à gradient (1–4),
– dont la longueur correspond à une période spatiale entière (P) d'un faisceau lumineux se propageant indépendamment de la longueur d'onde entre ses deux faces extrêmes sur un trajet sensiblement sinusoïdal,
– qui est subdivisée symétriquement par rapport à la direction de son axe longitudinal en moitiés de lentille-barreau à gradient (1, 2, 3, 4), les points d'entrée (A, B) et de sortie (C, D) de la lumière étant décalés vers les lignes d'intersection formées sur les faces extrêmes,
– qui comprend entre les surfaces de section longitudinales ainsi formées un diviseur de faisceau (10, 11), sous forme de couche qui repose directement sur elles et les recouvre entièrement, et
– qui comporte un intervalle s'étendant à partir du bord extérieur de la lentille-barreau sur le trajet du faisceau à l'intérieur de la lentille-barreau à gradient (1–4), sensiblement orthogonalement au diviseur de faisceau (10, 11), de sorte
– qu'il y a de chacun des deux côtés de l'intervalle une partie de lentille-barreau à gradient (1, 2 et 3, 4) au moins approximativement de demi-période spatiale (P/2), l'intervalle servant à recevoir le milieu (14, 14', 15, 15', 12) pour interrompre le chemin optique vers l'un des deux points de sortie de la lumière, en fonction de l'état du milieu dans chaque cas.

2. Dispositif interférométrique selon la revendication 1, caractérisé en ce que, pour une utilisation comme commutateur de chemin optique, des cristaux liquides pouvant être activés électriquement à volonté, faisant tourner de 90° la polarisation sous l'effet d'un champ électrique et dont la surface de chacun au moins deux fois plus grande que celle de l'image du point d'entrée de la lumière (A ou B) concerné sont introduits dans l'intervalle et en ce que des plaquettes quart d'onde λ/4 (14, 15 et 14', 15') sont disposées chaque fois entre les cristaux liquides (12) et les demi-surfaces de section transversale des moitiés de lentille-barreau à gradient (1, 2, 3, 4), de sorte que tant les plaquettes λ/4 (14, 14' et 15, 15') opposées de part et d'autre de la zone des cristaux liquides (12) que celles qui sont contiguës de chaque côté de la zone des cristaux liquides (12), retardent les composantes ondulatoires polarisées différemment respectives.

3. Dispositif interférométrique selon la revendication 2, caractérisé en ce que:

– des miroirs à gradins multiples (17, 18) en forme de grille échelette sont disposés sur les deux demi-surfaces de l'une des deux faces frontales de la lentille-barreau à gradient (1–4),

– en ce qu'un autre miroir à gradins multiples de ce genre (16) est placé sur une première demi-surface de l'autre face frontale de la lentille-barreau à gradient (1–4),

– en ce qu'il est placé au milieu sur la seconde demi-surface de l'autre face frontale de la lentille-barreau à gradient (1–4) un faisceau de fibres optiques (25) comprenant des guides de lumière acheminant des signaux qui constituent les points d'entrée et de sortie de la lumière,

– dont le diamètre est à peu près deux fois plus petit que le rayon de la face frontale de la lentille-barreau à gradient (1 à 4),

– en ce que les deux zones de cristaux liquides (12) comportent des parois pourvues de séries d'électrodes se croisant, comprenant chacune des électrodes mutuellement parallèles et transparentes,

– de sorte qu'on obtient deux champs matriciels de commutation, qui se trouvent sur le trajet des rayons entre les plaquettes quart d'onde λ/4 frontalement opposées (14, 15, 14', 15'), et

– en ce qu'un multiplexeur d'adressage (35) est raccordé par ses sorties pour la sélection de coordonnées des points de croisement d'électrodes des champs matriciels de commutation, aux séries d'électrodes de la zone de cristaux liquides (12).

4. Dispositif interférométrique selon la revendicaton 2 ou 3, caractérisé en ce que la tension nécessaire pour appliquer à volonté un champ électrique aux zones de cristaux liquides (12) provient de conversion d'énergie photo-électrique.

5. Dispositif interférométrique selon la revendication 4, caractérisé en ce que l'amenée de la lumière nécessaire pour la conversion d'énergie photo-électrique est assurée par au moins un guide de lumière de commande (22).

6. Dispositif interférométrique selon les revendications 4 et 5, caractérisé:

– en ce qu'au moins un guide de lumière de commande est appliqué à l'une des faces frontales de la lentille-barreau à gradient dans la zone des surfaces de section longitudinales de la lentille-barreau à gradient,

– en ce que, sur les trajets optiques imposés par les guides de lumière de commande, des surfaces de photodiodes sont placées entre les deux zones de cristaux liquides (12) dans un même plan qu'elles, et

– en ce que les points d'entrée (A, B) et de sortie (C, D) de la lumière des faisceaux lumineux de signal sont prévus sur des faces frontales séparées de la lentille-barreau à gradient (1 à 4).

7. Dispositif interférométrique selon l'une des revendications 1 à 6, caractérisé

– en ce qu'il compte en position immédiatement contiguë à l'une des faces frontales de la lentille-barreau à gradient (1–4) constituant le dispositif interférométrique, la face frontale d'un diviseur de faisceau chromatique sous forme d'une autre lentille-barreau à gradient (30) divisée symétriquement exactement sur l'axe longitudinal, de période spatiale deux fois plus petite (P/2), avec un point d'entrée de la lumière placé sur l'une des demi-surfaces de sa face frontale libre à une certaine distance des surfaces de section longitudinales en alignement axial exact des deux lentilles-barreaux à gradient (1 à 4 et 30),

– en ce qu'une couche de diviseur de faisceau chromatique (31) orientée orthogonalement à la couche de diviseur de faisceau (10, 11) de la lentille-barreau à gradient interférométrique (1 à 4) est placée directement entre les surfaces de section longitudinales de la lentille-barreau à gradient (30) constituant le diviseur de faisceau chromatique, et

– en ce que la rainure centrale ménagée dans la lentille-barreau à gradient interférométrique (1–4) pour recevoir le milieu est divisée en deux moitiés au moins approximativement égales (32, 33), tant orthogonalement à la couche de diviseur de faisceau (10, 11) qu'en direction de l'axe longitudinal de la lentille-barreau à gradient interférométrique (1–4), une des moitiés (32) comprenant un élément de commutation photoélectrique sur le trajet des rayons et l'autre moitié les quatre plaquettes quart d'onde λ/4 (14, 14', 15, 15') avec les zones de cristaux liquides (12) intercalées.

8. Dispositif interférométrique selon les revendications 1 à 7, caractérisé

– en ce que la ou les photodiode(s) et les électrodes d'application de champ des zones de cristaux liquides (12) est monté un générateur basse fréquence (20).

9. Dispositif interférométrique selon les revendications 1 à 8, caractérisé

– en ce que les diviseurs de faisceau (10, 11, 31) sont constitués par des couches diélectriques.

10. Dispositif interférométrique selon l'une des revendications 1 à 9, caractérisé

– en ce que les guides lumière (24, 26, 37, 38) sont constitués par des fibres optiques placées aux points d'entrée et de sortie de la lumière.

11. Dispositif interférométrique selon les revendications 1 à 10, caractérisé par l'utilisation en tant que commutateur de trajet optique pouvant être commandé électriquement ou optiquement, d'une cellule à cristaux liquides contenant des couches nématiques torsadées d'orientation homogène.

FIG.1

FIG. 3

FIG. 4

FIG. 6

FIG.5

FIG.2

FIG.7

FIG. 8

FIG.9

A – B

FIG.10